Europäisches Patentamt

European Patent Office

Office européen des brevets

(11) Veröffentlichungsnummer: **0 316 683**
A2

## (12) EUROPÄISCHE PATENTANMELDUNG

(21) Anmeldenummer: 88118377.6

(22) Anmeldetag: 04.11.88

(51) Int. Cl.4: **A23K 1/16 , A23K 1/18**

(30) Priorität: 13.11.87 DE 3738570

(43) Veröffentlichungstag der Anmeldung:
**24.05.89 Patentblatt 89/21**

(84) Benannte Vertragsstaaten:
**AT BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Poralla, Dieter M.**
**Rieslingweg 17**
**D-6706 Wachenheim(DE)**
Erfinder: **Kohler, Walter, Dr.**
**Max-Slevogt-Strasse 2**
**D-6710 Frankenthal(DE)**

(54) Futtermittel für Ferkel, Mastschweine und Geflügel.

(57) Es werden Allein- oder Ergänzungsfuttermittel für Mastschweine, Ferkel und Geflügel vorgeschlagen, die aus Magnesiumdipropionat bestehen oder dieses enthalten. Die Futtermittel haben bei den Tieren eine Anti-Stresswirkung.

EP 0 316 683 A2

Xerox Copy Centre

## Futtermittel für Ferkel, Mastschweine und Geflügel

Die Erfindung betrifft ein Futtermittel für Ferkel, Mastschweine und Geflügel, welches ein organisches Magnesiumsalz umfaßt. Die Erfindung betrifft ferner die Verwendung dieses Salzes zur Herstellung eines Futtermittels für Mastschweine, Ferkel und Geflügel.

Magnesium gehört zu den mineralischen Mengenelementen und findet sich im tierischen Organismus zu 62 bis 70 % im Skelett, während sich 30 bis 37 % auf den Intrazellularraum der sonstigen Organe verteilen. Etwa 1 % befindet sich in extrazellulären Flüssigkeiten. Magnesium ist von komplexer Bedeutung für den Organismus. Zu seinen zahlreichen Einzelfunktionen gehört unter anderem die als Enzymaktivator des Intermediärstoffwechsels und insbesondere seine Funktion bei der Erregungsübertragung im Nervensystem, wo es als Calciumanthagonist wirkt.

Nach dem derzeitigen Wissensstand gibt es kein hormonales Regulationssystem für den Magnesiumstoffwechsel. Ein bestimmter Magnesiumblutspiegel ist jedoch für die Aufrechterhaltung von Gesundheit und Leistungsfähigkeit von Tieren wichtig. Von besonderer Bedeutung ist daher die Bioverfügbarkeit des zugeführten Magnesiums. Bei bedarfsdeckender Dosierung liegt die Verwertung von mit der Nahrung zugeführtem Magnesium in der Praxis zwischen 10 und 20 %. Hierbei ist die Bioverfügbarkeit organischer Magnesiumverbindungen höher als die von anorganisch gebundenem Magnesium.

Der Einsatz von Magnesiumsalzen in Tierfutter ist seit langem bekannt. So beschreibt die GB-A-1 341 350 den Einsatz von Magnesiumpropionat oder Gemischen von Magnesiumpropionat und Magnesiumacetat in Futtermittel für Wiederkäuer. Hierdurch soll das Auftreten von Hypomagnesiämie vermieden werden. Weiterhin wird geltend gemacht, daß Milchproduktion und Milchqualität verbessert werden. Im wesentlichen den selben Sachverhalt beschreibt die JP-A-53098/281.

Die Verwendung von Magnesium- oder Calciumfumarat, gegebenenfalls in Form von Doppelsalzen von Phosphorsäure und/oder wasserlöslichen aliphatischen Carbonsäuren als Futtermittelzusatz ist in der DE-A-1 568 280, entsprechend der US-A-3 534 095, beschrieben. Wie dort ausgeführt wird, wird den Fumaraten eine spezielle physiologische Wirkung und eine erhöhte Retention zugeschrieben, was nach Angaben der Druckschrift insbesondere beim Magnesium futtertechnisch von großer Bedeutung sei.

Von einer anderen organischen Magnesiumverbindung, dem Magnesium-Aspartat-Hydrochlorid (Mg-Asp-HCl) liegen ebenfalls Untersuchungsergebnisse vor.

So wurde von Ali et al., Journal of Veterinary, Pharmaceutics and Therapeutics 10, 119-126, 1987) nach intramuskulärer Verabreichung von Mg-Asp-HCl ein Ansteigen des Prolaktinspiegels im Blut bei Puten nach induziertem Streß (Immobilisation) vermieden. Die Höhe des Prolaktinspiegels im Blut ist ein Maß für die Streßreaktion.

Bei Schweinen konnte die Injektion von Mg-Asp-HCl ebenfalls einen Anstieg von Parametern im Blut (z.B. Adrenalin) die eine Streßbelastung anzeigen, deutlich vermindern, vgl. Kietzmann und Jablonski, Praktischer Tierarzt 4, 328-335, 1985.

Magnesiumfumarat wird seit geraumer Zeit im Handel auch für einen anderen Zweck angeboten. Ergänzungsfuttermittel mit einem Gehalt an Magnesiumfumarat sollen bei Mastschweinen und Ferkeln den bei der intensiven Schweinehaltung auftretenden Stress, der sich beispielsweise in Rangordnungskämpfen, Kannibalismus, Herztod und dgl. äußert, verringern oder stoppen.

Nachteilig am Magnesiumfumarat-Ergänzungsfuttermittel für Schweine ist die Tatsache, daß Resorption und erzielte Magnesium-Blutspiegel noch nicht so hoch sind, daß eine voll befriedigende Verringerung der Wirkungen von Stress-Situationen, insbesondere beim Einstallen der Läuferferkel und beim Transport der Mastschweine zum Schlachthof, erzielt wird.

Der Erfindung liegt die Aufgabe zugrunde, ein Futtermittel für Ferkel, Mastschweine und Geflügel zur Verfügung zu stellen, das diese Nachteile vermeidet.

Diese Aufgabe wird gelöst durch ein Futtermittel der genannten Art, das aus Magnesiumdipropionat besteht oder dieses enthält.

Das erfindungsgemäße Futtermittel kann in beliebiger fester oder flüssiger Form vorliegen. Es kann als mineralisches Einzelfuttermittel, als Alleinfutter, als Ergänzungsfutter in Form eines Eiweißkonzentrates oder einer Mineralfuttermischung oder als Prämix formuliert werden. Besonders zweckmäßig weist das Magnesiumdipropionat eine mittlere Korngröße im Bereich von 0,04 bis 0,2 mm, insbesondere 0,06 bis 0,15 mm, auf. Eine besonders bevorzugte Korngröße für die Einmischung in mehlförmige Futtermittel liegt bei etwa 0,08 mm. Das Magnesiumdipropionat weist vorzugsweise eine Schüttdichte von 0,40 bis 0,48 g/ml, insbesondere von etwa 0,44 g/ml auf.

Zweckmäßig ist das Magnesiumdipropionat durch Umsetzung von Magnesiumhydroxid oder Magnesiumoxid mit Propionsäure erhältlich. Man erhält hierbei ein Produkt mit geringer Hygroskopizität mit einem Wassergehalt von <5 % (nach Karl Fischer). Der Gehalt an Magnesium liegt bei mindestens 14 Gew.%, der an Propionsäure bei max. 3 %.

Das im erfindungsgemäßen Futtermittel eingesetzte Magnesiumdipropionat fällt bei der wie zuvor beschriebenen Herstellung nur wenig oder nicht staubend an. Wenn ein Stauben völlig vermieden werden soll, kann dies durch Zugabe von Öl erreicht werden.

Wird Magnesiumdipropionat als Einzelfuttermittel an Tiere verabreicht, so wird bevorzugt die granulierte Form mit einer Korngröße von 0,4 bis 1,5 mm verwendet. Dadurch wird das Stauben vermieden und eine bessere Futteraufnahme erzielt.

Das erfindungsgemäße Futtermittel kann verschiedene Zusätze enthalten, so beispielsweise Leistungsförderer, die zweckmäßig in Form einer Vormischung zugesetzt werden, Mono- und/oder Dicalciumphoshat, Vitamine, die zweckmäßig in Form einer Vormischung zugesetzt werden, Aminosäuren, Spurenelemente, Viehsalz, kohlensauren Futterkalk, Luzernegrünmehl, Melasse, DL-Methionin, Würzstoffe, Weizen-Gries-Mehl und andere übliche Zusatzstoffe.

Besonders bevorzugt ist ein Futtermittel in Form einer Mineralfuttermischung der Zusammensetzung:

15 bis 30 Gew.% Calcium
2 bis 10 Gew.% Phosphor
2 bis 8 Gew.% Natrium
1 bis 6 Gew.% Magnesiumdipropionat,

Rest zugehörige Anionen, sowie gegebenenfalls Vitamine, Spurenelemente, Leistungsförderer und Aminosaüren.

Gegenstand der Erfindung ist auch die Verwendung von Magnesiumdipropionat zur Herstellung eines Futtermittels für Ferkel, Mastschweine und Geflügel.

Wichtig ist, daß man kein Magnesiummonopropionat sondern Magnesiumdipropionat verwendet. Zwar weist das Magnesiummonopropionat eine bessere Löslichkeit im Wasser auf, der Restanteil an freiem Magnesiumhydroxid ist jedoch zu groß und das Monopropionat zeigt überdies eine hohe Hygroskopizität, was für die Verarbeitung im Futtermittel nachteilig ist.

Überraschenderweise wurde festgestellt, daß Mangesiumdipropionat bei Mastschweinen und Ferkeln eine stärkere Beruhigungs-Wirkung als Magnesiumfumarat aufweist. Dieser Befund ist in der nachstehenden Versuchsbeschreibung ausführlicher dargelegt.

A) Vergleich der Beruhigungswirkung von Magnesiumdipropionat mit Magnesiumfumarat und Magnesiumoxid bei Ferkeln und Mastschweinen

Bei Magnesium-äquivalenter Dosierung ist a priori nicht zu erwarten, daß Magnesiumpropionat eine stärkere Beruhigungs-Wirkung als Magnesiumfumarat bei Mastschweinen und Ferkeln hat.

Die nachfolgende Versuchsreihe zeigt einen Vergleich der Beruhigungs-Wirkung und der erzielten Mastleistung dieser beiden Verbindungen beim Ferkel.

Sowohl das Einstallen der Läuferferkel, das im Gewichtsbereich von ca. 20 kg Lebendmasse stattfindet, sowie der Transport der Mastschweine mit 100 kg Lebendmasse zum Schlachthof stellen besondere Stress-Situationen für die heutigen Schweinerassen dar.

a) Mit 20 kg schweren Ferkeln der Rasse DL X Pietrain wurde folgender Versuch durchgeführt:

Versuchsdurchführung

Insgesamt standen 15 Würfe mit mindestens 10 Ferkeln pro Wurf zur Verfügung, die nach dem Absetzen in der Abferkelbox verblieben waren. Extrem schwere oder leichte Ferkel wurden aus den einzelnen Würfen herausgenommen, bis 150 Ferkel (pro Wurf 10) für den weiteren Versuch zur Verfügung standen.

Eine Woche bevor die Ferkel durchschnittlich etwa 20 kg wogen, wurden die 15 Würfe nach dem Zufallsprinzip in 3 Gruppen à 5 Würfe aufgeteilt.

Gruppe 1 wurde weiterhin mit einem praxisüblichen Ferkelaufzuchtfutter versorgt (mit 3 % Mineralfutter).

Das Alleinfutter der Gruppen 2 und 3 bestand zu 4 % aus einem Mineralfutter, das sich für die beiden Gruppen nur hinsichtlich der Mg-Quelle unterschied.
Die Zusammensetzung des jeweils eingesetzten Mineralfutters war wie folgt:

A.   Zusammensetzung des erfindungsgemäßen Mineralfutters:

mit Mg-Propionat

25   % kohlens. Futterkalk
22,5 % MCP (Monocalciumphosphat)
10   % Viehsalz
6   % DCP (Dicalciumphosphat)
6   % Vitaminvormischung
5   % Spurenelemente Vormischung (handelsüblich)
3   % Luzernegrünmehl
2   % Melasse
2   % Leistungsförderer (handelsüblich)
1   % DL-Methionin
0,5 % Würzstoffe
14,5 % Mg-Dipropionat*
+2,5 % Weizengrieskleie
_____
100   % gesamt

*    analysiert: Mg-Gehalt von 14,2 % im Magnesiumdipropionat.

4

B:   Zusammensetzung des Mineralfutters mit Mg-Fumarat nach
     DE-A-1 568 280

     mit Mg-Dipropionat

     25    % kohlens. Futterkalk
     22,5 % MCP
     10    % Viehsalz
      6    % DCP
      6    % Vitaminvormischung (handelsüblich)
      5    % Spurenelemente Vorm.
      3    % Luzernegrünmehl
      2    % Melasse
      2    % Leistungsförderer (handelsüblich)
      1    % DL-Methionin
      0,5  % Würzstoffe
     17    % Mg-Fumarat*

     100   % gesamt

     *    analysiert: Mg-Gehalt von 11,3 % im Handelsprodukt.

C:   Zusammensetzung eines Mg-oxidhaltigen, handelsüblichen
     Mineralfutters für die Kontrollgruppe

     25    % kohlens. Futterkalk
     22,5 % MCP
     10    % Viehsalz
      6    % DCP
      8    % Vitaminvormischung
      7    % Spurenelemente
      3    % Luzernegrünmehl
      2    % Melasse
      3    % Magnesiumoxid
      2    % Leistungsförderer (handelsüblich)
      1,5  % DL-Methionin
      0,5  % Würzstoffe
      9,5  % Weizengrießmehl

     100   % gesamt

Nachdem die Tiere die Versuchs-Futter 1 Woche lang erhalten hatten, wurden sie in den Vormaststall umgesetzt. Dabei wurde folgendermaßen vorgegangen: aus jeder einzelnen der fünf Buchten mit Ferkeln aus Gruppe 1 wurden je zwei Ferkel entnommen und in einer neuen Gruppe à 10 Tiere aufgestallt.

Ebenso wurde innerhalb Gruppe 2 und 3 verfahren. Die differenzierte Fütterung blieb demnach für die einzelnen Gruppen bestehen.

Datenerfassung

Der Versuch dauerte 14 Tage, jeweils eine Woche vor und eine Woche nach dem Umstallen. Dabei wurde die Lebendmasse der Ferkel zu Beginn und am Ende des Versuchs erfaßt. Die Feststellung der Futteraufnahme erfolgte durch Rückwaage des nicht verzehrten Futters.

Weiterhin wurde in den ersten 3 Tagen nach dem Umstallen die Anzahl der Rangkämpfe innerhalb der Gruppen notiert und die Anzahl der Tiere mit deutlich sichtbaren Kampfspuren festgehalten.

Eine Zusammenfassung der Versuchsergebnisse findet sich in der folgenden Tabelle.

Angegeben werden darin die Mittelwerte der Versuchsgruppen.

| Versuchsgruppe | Gruppe 1 Kontrolle | Gruppe 2 Mg-Fumarat | Gruppe 3 Mg-Dipropionat |
|---|---|---|---|
| tägliche Futteraufnahme (kg/Tier) | 1,08 | 1,07 | 1,08 |
| tägliche Zunahme (g/Tier) | 408 | 429 | 447 |
| Futterverbrauch pro kg Zuwachs | 2,65 | 2,49 | 2,26 |
| Zahl der Rangkämpfe | | | |
| am 1. Tag | 57 | 27 | 17 |
| am 2. Tag | 25 | 9 | 5 |
| am 3. Tag | 4 | 3 | 5 |
| nach Umstallung Anzahl der Tiere mit deutlich sichtbaren Verletzungen | 31 | 15 | 7 |
| Zusätzliche Mg-Aufnahme; mg pro kg Lebendmasse und Tag | - | 47 | 44 |

EP 0 316 683 A2

b) bei 90 bis 100 kg schweren Mastschweinen

Diese erhielten 1 Woche vor dem geplanten Schlachttermin rund 40 mg Magnesium pro kg Lebendmasse und Tag. Dieses wurde entweder in Form von Mg-Fumarat oder als Mg-Dipropionat zusätzlich zum Futter verabreicht. Pro Tier und Tag wurden rund 35 g Mg-Fumarat bzw. 30 g Mg-Dipropionat verabreicht.

Gleichzeitig lief eine Kontrollgruppe ohne Mg-Supplementierung mit.

Datenerfassung

In einem Zeitraum von 9 Monaten wurden bei 400 Schweinen pro Versuchsgruppe die Ausfälle während des Transports zum Schlachthof und vor dem Schlachten festgehalten.

Die Verluste gliedern sich wie folgt auf:

| | Verluste in % |
|---|---|
| Kontrollgruppe | 2,0 |
| Mg-Fumarat-Gruppe | 1,4 |
| Mg-Propionat-Gruppe | 0,2 |

Eine vergleichende Wirkung zwischen den Versuchsgruppen ist zulässig, da aus allen 3 Gruppen eine gleichgroße Anzahl von Tieren am gleichen Tag zum Schlachthof transportiert wurden.

Die Mastschweine stammten alle aus einem Betrieb mit 600 Stallplätzen, so daß ein Umwelteinfluß auf die Anzahl der Verluste minimiert wurde.

Daher können die ermittelten Verluste auf die unterschiedliche Mg-Verbindung zurückgeführt werden.

Ergebnisse

Anhand der Mastleistungsdaten in einem Zeitraum kurz vor und kurz nach dem Umstallen, ist zu erkennen, daß eine zusätzliche Verabreichung von organisch gebundenem Magnesium zu einer Verbesserung der Mastleistung führt.

Dies dürfte zum überwiegenden Teil darauf beruhen, daß die Tiere in diesen Gruppen insgesamt wesentlich ruhiger waren, was aus der stark reduzierten Anzahl von Rangordnungskämpfen und daraus folgenden Verletzungen resultiert.

Zwischen den beiden organischen Magnesiumverbindungen existieren aber auch größere Unterschiede in den Meß- und Beobachtungswerten. Hierbei schneidet das Magnesium-dipropionat in allen Kriterien eindeutig besser ab, was nicht vorherzusehen war.

Diese Erkenntnisse wurden durch den Versuch mit den Mastschweinen voll bestätigt. Auch hier waren durch den Einsatz von Mg-Dipropionat die Verluste gegenüber der Kontroll- und Mg-Fumarat-Gruppe eindeutig geringer.

Insgesamt ist festzuhalten, daß durch den Einsatz und die überlegene Wirkung von Mg-Dipropionat ein deutlicher Beruhigungs-Effekt beim Schwein erreichbar ist.

B) Effekt der Verabreichung von Magnesiumpropionat im Futter für Hühner- und Putenküken

Hühner- und Putenküken sind besonders schreckhafte Tiere, und bei ungewöhnlichen optischen oder akustischen Signalen kann es zu Fluchtreaktionen kommen. Dabei flüchten alle Tiere in eine Ecke ihres Stalles und türmen sich dort regelrecht an der Wand auf. Es kommt so zu Erdrückungsverlusten, die enorme wirtschaftliche Verluste darstellen können.

Zur Klärung der Frage, in inwieweit die Verabreichung von Futter mit 3 % Magnesiumpropionat einen beruhigenden Effekt ausübt, wurde ein praxisrelevanter Versuch mit Putenküken durchgeführt. Von wissenschaftlichen Untersuchungen (Ali et al., 1987) her ist bereits bekannt, daß eine zusätzliche Applizierung von organisch gebundenem Magnesium streßmindernd wirkt.

Durchgeführt wurde der Versuch in einem Stall, der durch den zentralen Beobachtungs- und Fütterungsgang in zwei Hälften getrennt war.

Puten in der linken Hälfte des Stalles erhielten ein Futter mit 4,5 % Magnesiumdipropionat, während die

8

Tiere in der rechten Hälfte des Stalles Futter ohne Zusatz von Magnesiumdipropionat erhielten. Beim zweiten Versuchsdurchgang wurde umgekehrt verfahren.

Kriterien für die Wirksamkeit des Zusatzes waren die Mastleistung und die Verluste während der Mast. Die Ergebnisse sind in der nachfolgenden Tabelle I aufgeführt.

Tabelle I

| Merkmal | ohne Mg-Dipropionat | mit Mg-Dipropionat |
|---|---|---|
| Lebendmasse | 7,2 kg | 7,6 kg |
| nach 14 Wochen | 6,0 kg | 6,3 kg |
| Verluste während | 3,2 % | 2,5 % |
| der Mast | 2,1 % | 1,7 % |

Ergebnis:

Insgesamt führt der Zusatz von Mg-Dipropionat zum Futter zu besseren Mastleistungen und verringerten Verlusten gegenüber der Kontrollgruppe.

Diese meßbaren Verbesserungen wurden durch den subjektiven Eindruck des Betreuungspersonals bestätigt. Diejenigen Tiere, die eine Supplementierung von Mg-Propionat im Futter erhielten, reagierten wesentlich ruhiger bei ungewohnten Signalen.

Die Erfindung wird durch die nachstehenden Beispiele näher erläutert.

Beispiele 1 bis 6

Mineralfutterrezepturen für Schweine mit den in der nachstehenden Tabelle II aufgeführten Zusammensetzungen

Tabelle II

| Zusammensetzung in (%) | Beispiel Nr. | | | | | |
|---|---|---|---|---|---|---|
| | 1 für Mastschweine | 2 für Getreidemast | 3 für Maismast | 4 für Schnellmast | 5 für Molkemast | 6 für Zuchtsauen |
| Calciumcarbonat | 32 | 32,5 | 37,5 | 32 | 44,5 | 27 |
| Ca-Na-Mg-phosphat | 35 | | 29 | | 16 | |
| Natriumchlorid | 3 | 13 | 4 | 14 | | 14 |
| Melasse | 1 | 1 | 1 | 1 | 1 | 1 |
| Monocalciumphosphat | | 27,5 | | 31 | 16,5 | 36 |
| Magnesiumdipropionat | 13 | 13 | 14 | 14 | 14 | 14 |
| Vitaminvormischung | 3 | 4 | 1,5 | 2 | 2 | 2 |
| Cholinchlorid | 5 | 5 | 3 | 2 | 2 | 3 |
| Spurenelement-Vormischung | 4 | 4 | 4 | 4 | 4 | 3 |
| Leistingsförderer Aminosäuren (Lysin, Methionin) | 4 | | 6 | | | |
| insgesamt | 100 | 100 | 100 | 100 | 100 | 100 |
| wertbestimmende Inhaltstoffe | | | | | | |
| Calcium | 15 | 16,8 | 16,7 | 17,0 | 20,3 | 16,5 |
| Natrium | 5 | 5 | 5 | 5 | 2 | 5 |
| Phosphor | 6 | 6 | 5 | 7 | 6,5 | 8 |
| Magnesium | 3,3 | 1,8 | 2,9 | 1,9 | 2,4 | 1,9 |
| Dosierempfehlung % im Alleinfutter | 4 | 4 | 3 | 3-4 | 3 | 3 |

EP 0 316 683 A2

Beispiele 7 bis 12

Schweinemast Alleinfutter mit den in der nachstehenden Tabelle III angegebenen Zusammensetzungen

Tabelle III

| Komponenten (%) | 7 | 8 | 9 | 10 | 11 | 12 |
|---|---|---|---|---|---|---|
| Getreide | - | 55 | - | 54 | 30 | 30 |
| Maniok | 23 | - | 27 | - | 10 | 10 |
| Sojaschrot und Sojaprodukte | 20 | 20 | 20 | 20 | 20 | 20 |
| tierische Eiweißträger | 2,0 | 2,0 | 2,0 | 2,0 | 2,0 | 2,0 |
| Maisarin, Maiskeimschrot | 35 | 2,0 | 34,5 | 2,5 | 20 | 20 |
| hochwertige Eiweiß- und Energieträger | 16 | 17 | 12 | 17 | 14 | 13,5 |
| Mineralstoffe | 1,5 | 1,5 | 1,5 | 1,5 | 1,5 | 1,5 |
| Vitamin-Vormischung | 1,0 | 1,0 | 1,0 | 1,0 | 1,0 | 1,0 |
| Mg-Dipropionat | 1,5 | 1,5 | 2,0 | 2,0 | 1,5 | 2,0 |
| Umsetzbare Energie MJ/kg | 12,6 | 13,0 | 12,6 | 13,0 | 12,8 | 12,8 |
| Rohprotein % | 16,5 | 17,0 | 16,0 | 17,0 | 16,5 | 16,5 |
| Calcium % | 0,85 | 0,85 | 0,85 | 0,85 | 0,85 | 0,85 |
| Phosphor % | 0,65 | 0,65 | 0,65 | ,65 | 0,65 | 0,65 |
| Magnesium g/kg (aus Mg-Dipropionat) | 2,1 | 2,1 | 2,8 | 2,8 | 2,1 | 2,8 |
| Natrium % | 1,10 | 1,10 | 1,10 | 1,10 | 1,10 | 1,10 |

Mischung 7 und 9 sind Beispiele für reines Substitutenfutter.
Mischung 8 und 10 sind getreidereiche Futter
Mischung 11 und 12 beinhalten sowohl Getreide als auch Substitute
Alle drei Futterarten wurden mit unterschiedlichen Anteilen an Mg-Dipropionat kalkuliert

Beispiel 13 und 14

Putenmastfutter mit den in der nachstehenden Tabelle IV angegebenen Zusammensetzungen

Tabelle IV

| Komponenten (%) | Beispiel | |
|---|---|---|
| | 13 | 14 |
| Getreide | 48 | 40 |
| Sojaschrot und Sojaprodukte | 35 | 18 |
| tierische Eiweißträger | 2,0 | 2,0 |
| Maiskeimschrot | - | 7,0 |
| hochwertige Energie- und Eiweißträger | 8,0 | 25 |
| Mineralstoffe | 3,0 | 2,5 |
| Vitamin-Vormischung | 1,0 | 1,0 |
| Mg-Dipropionat | 3,0 | 4,5 |
| Umsetzbare Energie MJ/kg | 12,2 | 12,9 |
| Rohprotein % | 23 | 16 |
| Calcium % | 1,2 | 1,1 |
| Phosphor % | 0,8 | 0,8 |
| Magnesium g/kg (aus Mg-Dipropionat) | 4,2 | 6,3 |
| Natrium % | 0,15 | 0,15 |

Beispiel 15

Ergänzungsfutter (Eiweißkonzentrat) mit der in der nachstehenden Tabelle V angegebenen Zusammensetzung:

| Komponenten (%) | |
|---|---|
| Sojaprodukte und Sojaschrot | 32 |
| tierisches Eiweiß | 53 |
| hochwertige Eiweiß- und Energieträger | 1,0 |
| Mineralstoffe | 8,0 |
| Vitamin-Vormischung | 1,0 |
| Mg-Dipropionat | 5 |
| Umsetzbare Energie MJ/kg | 14,0 |
| Rohprotein % | 45 |
| Calcium % | 5,5 |
| Phosphor % | 2,0 |
| Magnesium g/kg (aus Mg-Dipropionat) | 0,7 |
| Natrium % | 1,1 |
| Mischanweisung: | |
| 70 % Getreide oder andere Stärke-haltige Futtermittel | |
| 30 % Eiweißkonzentrat | |
| 100 % | |

**Ansprüche**

1. Futtermittel für Ferkel, Mastschweine und Geflügel, bestehend aus oder enthaltend Magnesiumdipropionat.

2. Futtermittel nach Anspruch 1 in Form eines mineralischen Einzelfuttermittels, einer Mineralfuttermischung eines Mischfutters, eines Ergänzungsfutters oder eines Prämixes.

3. Futtermittel nach einem der Ansprüche 1 oder 2, worin das Magnesiumdipropionat eine mittlere Korngröße im Bereich von 0,04 bis 0,2 mm, insbesondere 0,06 bis 0,15 mm, aufweist.

4. Futtermittel nach einem der Ansprüche 1 oder 2, worin das Magnesiumdipropionat in granulierter Form mit mittlerer Korngröße im Bereich von 0,4 bis 1,5 mm vorliegt.

5. Futtermittel nach einem der Ansprüche 1 bis 4, worin das verwendete Magnesiumdipropionat einen pH-Wert von etwa 9, gemessen in 10 %iger Lösung bei 25° C, aufweist.

6. Futtermittel nach einem der Ansprüche 1 bis 5, worin das Magnesiumdipropionat eine Schüttdichte im Bereich von 0,35 bis 0,55, insbesondere von 0,40 bis 0,48 g/ml aufweist.

7. Futtermittel nach einem der Ansprüche 1 bis 6, worin das Magnesiumdipropionat durch Umsetzung von Magnesiumhydroxid oder Magnesiumoxid mit Propionsäure erhältlich ist.

8. Futtermittel nach einem der Ansprüche 1 bis 7, zusätzlich enthaltend Leistungsförderer, Mono- und Dicalciumphoshat, Vitamine, Aminosäuren und Spurenelemente.

9. Futtermittel nach einem der Ansprüche 1 bis 8, in Form einer Mineralfuttermischung für Schweine mit folgenden Inhaltstoffen:

15 bis 30 Gew.% Calcium
2 bis 10 Gew.% Phosphor
2 bis 8 Gew.% Natrium
1 bis 6 Gew.% Magnesium in Form von Magnesiumdipropionat,

sowie gegebenenfalls Vitaminen, Spurenelementen, Leistungsförderern und Aminosäuren.

10. Futtermittel nach einem der Ansprüche 1 bis 9 in Form eines Alleinfutters (Mischfutter) für Schweine und Geflügel.

11. Futtermittel nach einem der Ansprüche 1 bis 9 in Form eines eiweißreichen Ergänzungsfuttermittels für Schweine.

12. Verwendung von Magnesiumdipropionat zur Herstellung eines Futtermittels für Ferkel, Mastschweine und Geflügel.